# EUROPÄISCHE PATENTSCHRIFT

(11) **EP 1 529 996 B1**
(45) Veröffentlichungstag und Bekanntmachung des Hinweises auf die Patenterteilung: **21.10.2009**
(21) Anmeldenummer: 04405666.1
(22) Anmeldetag: 02.11.2004
(51) Int. Cl.: F16L 3/13, F16L 3/133, F16L 3/127, F16L 3/227, F16L 3/237

(54) **Rohrhalterungsvorrichtung**
Pipe holding device
Dispositif de support de tuyaux

(30) Priorität: 07.11.2003 EP 03405795
(43) Veröffentlichungstag der Anmeldung: 11.05.2005
(73) Patentinhaber: Wermuth Enterprises, 3400 Burgdorf (CH)
(72) Erfinder: Wermuth, Reto, 3400 Burgdorf (CH)
(74) Vertreter: Roshardt, Werner Alfred

(56) Entgegenhaltungen:
- WO-A-03/064867
- DE-A- 19 726 331
- DE-C- 530 012
- GB-A- 1 384 922
- NL-A- 7 803 757
- US-B1- 6 257 530

## Beschreibung

### Technisches Gebiet

Die Erfindung betrifft eine Rohrhalterungsvorrichtung zum Befestigen eines Rohrs an einer Fläche und ein Verfahren zum Befestigen eines Rohrs an einer Fläche.

### Stand der Technik

Herkömmlich wurden Rohre besonders in Wohn- und Geschäftsräumen meistens so verlegt, dass sie nach Abschluss der Arbeiten nicht mehr sichtbar waren. Sie wurden üblicherweise hinter einer Abdeckplatte, einer vorgelagerten Wand oder einer abgehängten Decke versteckt. Dies führte einerseits zu einem gewissen Raumverlust und war andererseits aufwändig, besonders bei Renovationen und Umbauten. Heute werden vermehrt frei verlegte Rohre verwendet, auch bewusst, als architektonisches Stilelement.

Zur Befestigung der Rohre an einer Fläche, z. B. der Wand oder der Decke, sind zwar eine Vielzahl von Befestigungsvorrichtungen bekannt.

Diese bekannten Vorrichtungen, wie Rohrschellen oder -briden, sind aber eigentlich ausgelegt für die Befestigung von Rohren in Industrieräumen oder von Rohren, die nach Abschluss der Bauarbeiten versteckt angeordnet sind. Sie entsprechen einerseits optisch nicht den Anforderungen für das freie Verlegen von Rohren in Wohn- oder Geschäftsräumen und weisen andererseits oft hervorstehende Teile auf, welche eine Verletzungsgefahr bilden und an welchen sich Staub ablagert. Die Montage bekannter Vorrichtungen ist zudem oft aufwändig.

Gemäß dem Oberbegriff des Anspruchs 1 beschreibt die GB 1 384 922 (Wavin B. V.) eine Rohrschelle mit einem flexiblen Schellenteil sowie einem Befestigungsteil, welcher zwei Paare von Ausnehmungen aufweist, in welche die gabelförmigen Enden des Schellenteils clipartig einrasten können. Dies ermöglicht, dass die Schelle je nach gewähltem Ausnehmungspaar entweder das Rohr oder eine entsprechend dickere Muffe für dasselbe Rohr aufnehmen kann. Der Befestigungsteil ist röhrenförmig und hat eine offene Vorderfläche zum Einführen der gabelförmigen Enden. Die Befestigung der Rohrschelle erfolgt mit einer Schraube, die durch ein Loch in der rückseitigen Fläche des Befestigungsteils geführt und in der Wand verschraubt wird, wobei der Schraubenkopf an einem durch die Rückwand gebildeten Anschlag zu liegen kommt. Die Schraube ist nach erfolgter Befestigung vollständig im Befestigungsteil aufgenommen, der Befestigungsteil ist mit seiner Hauptachse senkrecht zur Wandfläche orientiert. Nach der Befestigung wird der rohrförmige Befestigungsteil in Richtung seiner Hauptachse gegen die Wand gedrückt und an seinem hinteren Ende stabil abgestützt.

Erst kann also der Befestigungsteil unabhängig vom Rohr an der Fläche angebracht werden, worauf der Rohrhalteteil zusammen mit dem Rohr am Befestigungsteil angebracht wird. Durch den Clip-Mechanismus können die vormontierten Teile einfach und schnell miteinander verbunden werden. Gleichzeitig werden potenziell gefährliche und optisch unschöne hervorstehende Schraubenköpfe oder andere Befestigungselemente vermieden.

Der Querschnitt und die Querschnittsform des Befestigungsteils können je nach gewünschtem optischen Eindruck gewählt werden, die Form z. B. rund oder rechteckig. Dadurch, dass das Befestigungsmittel vollständig im Befestigungsteil aufgenommen ist, tritt es nach aussen nicht in Erscheinung. Dies bietet einen ästhetischen Vorteil. Ein Befestigungsteil mit senkrecht zur Wand orientierter Hauptachse, welches neben der Befestigung auch als Distanzstück dienen kann, wirkt zudem optisch schlank und unauffällig. Anstelle einer Schraube kann das Befestigungsmittel auch beispielsweise ein Anker oder ein Nagel sein.

Besonders bei engen Platzverhältnissen oder Rohrschellen mit einem langen Befestigungsteil ist diese Art der Befestigung aber oft erschwert oder gar verunmöglicht, was den Anwendungsbereich der Rohrschelle einengt.

### Darstellung der Erfindung

Aufgabe der Erfindung ist es, eine dem eingangs genannten technischen Gebiet zugehörende Rohrhalterungsvorrichtung zu schaffen, welche schnell und einfach montierbar ist, optisch sowie strukturell für das sichtbare Verlegen von Rohren in Wohn- und Geschäftsräumen geeignet und flexibel anwendbar ist.

Die Lösung der Aufgabe ist durch die Merkmale des Anspruchs 1 definiert. Gemäss der Erfindung ist am Anschlag für den Schraubenkopf ein Innengewinde zur Aufnahme der Schraube mit einem passenden Aussengewinde, insbesondere für eine Stockschraube, ausgebildet und der Anschlag für den Schraubenkopf ist an mindestens einem von Wänden des Befestigungsteils nach innen ragenden Flansch ausgebildet, wobei der mindestens eine Flansch von einem in befestigtem Zustand der Fläche zugewandten Ende des Befestigungsteils beabstandet ist.

Stockschrauben weisen am vorderen Ende ein Holz- bzw. Dübelgewinde auf und am hinteren Ende ein metrisches Gewinde. An der Stirnseite des hinteren Endes ist ein Inbus-Innensechskant oder eine Torx-Werkzeugaufnahme vorgesehen. Die Stockschraube wird zunächst mittels eines Inbus- bzw. Torx-Werkzeugs in die Fläche eingeschraubt, der Befestigungsteil kann dann auf die Stockschraube aufgeschraubt werden, wobei das metrische Aussengewinde der Stockschraube mit dem Innengewinde am Anschlag zusammenwirkt. Auf diese Weise ist es nicht notwendig, dass ein Werkzeug in den Befestigungsteil eingeführt werden kann.

Falls der Anschlagbereich mit einem Werkzeug erreichbar ist, kann der Anschlag trotz des Gewindes weiterhin mit herkömmlichen Schrauben verwendet werden. Deren Schaftdurchmesser wird so gewählt, dass sie frei durch das Innengewinde hindurchgeführt werden können. Die erfindungsgemässe Ausführung ermöglicht somit einen flexiblen Einsatz an verschiedenen Befestigungsstellen und mit verschiedenen Befestigungsmitteln.

Es ist vorteilhaft, wenn der Clip-Mechanismus wieder lösbar ist, so dass der Rohrhalteteil bei Bedarf auf einfache Weise wieder vom Befestigungsteil getrennt werden kann.

Mit Vorteil ist der Clip-Mechanismus durch mindestens eine federnde Lasche am Rohrhalteteil und mindestens einen entsprechenden Anschlag am Befestigungsteil gebildet. Diese Anordnung erlaubt eine besonders einfache Ausbildung des Rohrhalteteils und des Befestigungsteils. Besonders vorteilhaft ist die symmetrische Anordnung jeweils zweier Laschen und entsprechend zweier Anschläge. So können die auftretenden Kräfte gleichmässig verteilt werden.

Es kann vorteilhaft sein, zwei federnde Laschen hintereinander oder eine federnde Lasche mit zwei Einrastbereichen vorzusehen, so dass das zu befestigende Rohr nach Einrasten des durch die erste Lasche und den Anschlag gebildeten ersten Clip-Mechanismus noch in die gewünschte Position gerichtet werden kann. Ist dies erfolgt, kann die zweite Lasche mit dem Anschlag in Eingriff gebracht werden, so dass das Rohr durch den zweiten Clip-Mechanismus fest an der Rohrhalterungsvorrichtung fixiert wird.

Alternativ kann eine federnde Lasche am Befestigungsteil mit einem Anschlag am Rohrhalteteil zusammenwirken. Anstelle einer federnden Lasche können andere federnde Elemente vorgesehen sein, wie z. B. eine Mehrzahl federnd gelagerter, durch eine Kontaktfläche zwischen dem Rohrhalteteil und dem Befestigungsteil hindurchtretender Kugeln, welche mit entsprechenden Ausnehmungen an der Gegenfläche zusammenwirken.

Bevorzugt sind die federnde Lasche und der Anschlag derart ausgebildet, dass bei eingerastetem Clip-Mechanismus ein den Anschlag einschliessender Winkel zwischen einem Kontaktbereich der federnden Lasche mit dem Anschlag und einer Trennrichtung gleich ist oder kleiner als 90 °. Diese Formgebung stellt sicher, dass der Rohrhalteteil nicht ohne Weiteres (z. B. ohne Werkzeug) wieder vom Befestigungsteil getrennt werden kann. Die Kraft, welche beim Versuch, den Rohrhalteteil in Trennrichtung aus dem Befestigungsteil zu ziehen, vom Anschlag auf den Kontaktbereich der federnden Lasche ausgeübt wird, bewirkt nämlich nicht, dass die federnde Lasche nachgibt und so ein Herausziehen ermöglicht wird. Diese Wirkung wird auch dann erreicht, wenn die federnde Lasche am Befestigungsteil und der Anschlag am Rohrhalteteil angeordnet sind.

Die Rohrhalterungsvorrichtung kann eine Abdeckhülse aufweisen, welche derart ausgebildet ist, dass sie eng umschliessend auf den röhrenförmigen Befestigungsteil aufschiebbar ist. Damit kann ein verbleibender Zwischenraum zwischen dem Befestigungsteil und der Fläche abgeschlossen werden. Dadurch wird ein ästhetischer Anschluss des Befestigungsteils an die Fläche erreicht, und der Befestigungsteil auf der Fläche abgestützt.

Die Abdeckhülse kann aus demselben Material gefertigt sein wie der Befestigungsteil, damit eine einheitliche Optik erreicht wird, sie kann aber, z. B. zur Verbesserung der Gleitwirkung auf dem Befestigungsteil, auch aus einem anderen Material gefertigt werden. Sie kann auch einen mehrschichtigen Aufbau aufweisen, mit z. B. einer inneren Schicht für eine ungestörte Gleitwirkung auf dem Befestigungsteil und einer äusseren Schicht, welche eine einheitliche Optik mit dem Befestigungsteil gewährleistet.

Insbesondere bei der Verwendung mit Stockschrauben ist die über den Befestigungsteil aufschiebbare Abdeckhülse von Nutzen, lässt sich doch der Befestigungsteil üblicherweise nicht bis ganz an die Fläche auf die Stockschraube aufschrauben.

Der Anschlag für den Schraubenkopf ist an mindestens einem von Wänden des Befestigungsteils nach innen ragenden Flansch ausgebildet. Der Flansch ist derart am Befestigungsteil angeordnet, dass er von demjenigen Ende des Befestigungsteils beabstandet ist, welches der Fläche zugewandt ist, wenn der Befestigungsteil an der Fläche befestigt ist. Der Flansch kann im Wesentlichen umlaufend ausgebildet sein, oder es können mehrere, z. B. zwei gegenüberliegende, Flansche vorgesehen sein. Der Gewindeteil der Schraube kann durch eine Öffnung des Flansches bzw. durch einen Zwischenraum zwischen gegenüberliegenden Flanschen nach hinten aus dem Befestigungsteil hinaus geführt werden, während der Kopf der Schraube am Flansch bzw. an den Flanschen anschlägt.

Zur Veränderung des Abstands des Rohrs von der Wand kann der hintere Teil des Befestigungsteils, d. h. der hinter den Flanschen liegende Bereich, gekürzt werden. Der Befestigungsteil wird also z. B. mit einer Länge geliefert, welche dem maximal üblichen Rohrabstand entspricht. Ein geringerer Rohrabstand lässt sich durch Kürzen des Befestigungsteils auf einfache Weise erreichen. Dadurch, dass für verschiedene Rohrabstände nur ein Typ des Befestigungsteils vorrätig sein muss, können die Lagerhaltungskosten gesenkt werden.

Mit Vorteil ist der Rohrhalteteil im Wesentlichen durch eine Schelle gebildet, welche das Rohr umschliessend aufnehmen kann. Die Schelle ist quer zu einer Hauptachse des Rohrs über das Rohr schiebbar. Diese Lösung ist optisch unauffällig, weist keine hervorstehenden Teile auf und ist kostengünstig. Die Schelle lässt sich über ein bereits montiertes oder ein gebogenes Rohr schieben, dessen Enden nicht mehr frei zugänglich sind. Dies vereinfacht die Montage des Rohrs bei Verwendung der erfindungsgemässen Rohrbefestigungsvorrichtung. Damit die Schelle zum Schieben entsprechend verformt werden kann, besteht sie z. B. aus elastischem Material oder weist ein Scharnier auf.

Alternativ ist die Schelle fest an den Aussendurchmesser des Rohrs angepasst und wird vor der Montage vom Rohrende her auf das Rohr aufgeschoben. In diesem Fall ist es von Vorteil, wenn der Rohrhalteteil und/oder der Befestigungsteil Mittel aufweisen, durch welche das Rohr beim Einrasten des Clip-Mechanismus gleichzeitig axial in der Schelle festgehalten wird, z. B. ein Anschlag im Befestigungsteil, welcher von einer Feder nach aussen gegen das Rohr gedrückt wird.

Bevorzugt ist die federnde Lasche mit der Schelle einstückig ausgebildet. Dadurch wird der Fertigungsaufwand reduziert und Verbindungsstellen, welche optisch oft unschön und potentielle Schwachstellen sind, entfallen. Es ist zudem oft wünschenswert, dass der Schellenteil ebenfalls aus einem elastischen Material ausgebildet ist, so dass eine gewisse Anpassung an den Aussendurchmesser des Rohrs möglich ist.

Alternativ kann eine federnde Lasche z. B. an einem nicht elastischen Schellenteil angeordnet werden.

Anstelle einer Schelle kann auch eine Rohrhalterung vorgesehen werden, welche das Rohr nur teilweise umschliesst, oder eine mehrstückige Halterung, welche beispielsweise an verschiedene Rohrdurchmesser anpassbar ist.

Mit Vorteil ist ein von aussen sichtbarer Teil des Befestigungsteils und/oder des Rohrhalteteils aus, insbesondere oberflächenbehandeltem, Stahlblech gefertigt. Dieses Material ist optisch ansprechend und erfüllt alle mechanischen Anforderungen. Stahlblech erlaubt überdies die einstückige Fertigung des Rohrhalteteils, weil sich Stahlblech einer gewissen Dicke besonders zur Herstellung der federnden Lasche eignet und so auch der Schelle eine gewisse Elastizität zur Anpassung an den Aussendurchmesser des Rohrs bzw. zum Schieben der Schelle über das Rohr verleiht. Durch die Behandlung der Oberfläche lässt sich eine gewünschte, z. B. einer Inneneinrichtung angepasste, Farbe und Textur des Materials erreichen. Bevorzugt sind sämtliche von aussen sichtbare Teile der Rohrhalterungsvorrichtung aus demselben Material gefertigt. Besonders bevorzugt wird als Material Chromstahl gewählt.

Alternativ sind auch andere Materialien zur Fertigung der Vorrichtung geeignet, z. B. Messing, Kupfer, mehrlagige Bleche, Kunststoffe oder Aluminium für den Rohrhalteteil.

Bevorzugt weist der Rohrhalteteil an einer Kontaktfläche mit dem Rohr eine Einlage aus Gummi, insbesondere Lochgummi, auf. Die Gummieinlage verstärkt die Haftreibung zwischen der Schelle und dem Rohr, wodurch bei einem vertikal befestigten Rohr ein Teil des Rohrgewichts durch die Rohrhalterung auf die Fläche abgeleitet wird. Gleichzeitig wird die Elastizität der Schelle vergrössert, so dass grössere Toleranzen im Rohraussendurchmesser möglich sind. Die Gummieinlage dient ausserdem zur Schall- und Vibrationsdämmung. Lochgummi, d. h. eine Gummieinlage mit durchgehenden Löchern oder Regionen geringeren Querschnitts, zeigt die genannten Eigenschaften in noch höherem Masse. Wenn die Einlage aus Lochgummi entlang einer Linie geschnitten wird, welche ausschliesslich ausserhalb der Löcher oder Regionen geringeren Querschnitts verläuft, ist trotzdem die Herstellung einer Einlage möglich, welche überall einen geschlossenen Rand aufweist. Eine derartige Einlage führt zu einer verbesserten Optik. Spalte, in denen sich Staub und Schmutz ablagern kann sind überdies von aussen keine zugänglich.

Alternativ kann, besonders bei bestimmten Materialien der Schelle, auf eine Einlage verzichtet werden. Die Einlage kann ausserdem aus anderen Materialien, z. B. Kunststoffen oder Schaumstoff gefertigt werden.

Mit Vorteil ist die Einlage an einem ersten und/oder zweiten in Richtung der Längsachse des aufzunehmenden Rohrs liegenden Ende der Einlage durch eine im Wesentlichen ringförmige, an einen Aussendurchmesser des Rohrs angepassten Abdeckung abgeschlossen, wobei die Abdeckung insbesondere geschlitzt ist, um eine Verformung des Rohrhalteteils zu erlauben. Die Abdeckung ist mit Vorteil aus demselben Material wie die Schelle gefertigt. Dadurch ergibt sich ein einheitliches, unauffälliges Erscheinungsbild. Durch die Abdeckung wird das Eindringen von Staub oder Schmutz verhindert. Der Schlitz oder eine Mehrzahl von Schlitzen erlaubt die Verformung des Rohrhalteteils, z. B. beim Aufschieben über ein Rohr.

Alternativ ist keine Abdeckung vorgesehen, oder sie kann anstelle der Ringform einige Laschen aufweisen, welche vom Rohrhalteteil nach innen weisen und einen sicheren Sitz der Einlage gewährleisten. Besonders wenn keine Abdeckung vorgesehen ist, können mit einer einzigen Rohrhalterungsvorrichtung Rohre verschiedenen Durchmessers gehalten werden, indem der Querschnitt der Einlage dem Aussendurchmesser des Rohrs entsprechend gewählt wird.

Bevorzugt weist der Befestigungsteil mindestens eine seitliche Öffnung zum Einführen eines Werkzeugs zum Lösen des Clip-Mechanismus auf. Durch das Werkzeug kann das federnde Element des Clip-Mechanismus soweit zurückgebogen werden, dass sich der Rohrhalteteil leicht wieder aus dem Befestigungsteil zurückziehen lässt, so dass der Halteteil vollständig vom Befestigungsteil getrennt wird. Weist das Werkzeug zum Einführen eine dornartige Spitze auf, kann die Öffnung klein und somit optisch unauffällig gestaltet werden.

Alternativ können Mittel zum Lösen des Clip-Mechanismus direkt an der Rohrhalterungsvorrichtung vorgesehen werden oder zum Trennen muss eine bestimmte Rückzugskraft überwunden werden.

Eine Rohrhalterungsvorrichtung kann zusätzlich einen zweiten Befestigungsteil aufweisen sowie einen zweiten Rohrhalteteil. Dabei ist der zweite Rohrhalteteil zum Halten eines zweiten Rohrs ausgebildet und kann mit dem zweiten Befestigungsteil durch einen Clip-Mechanismus verbunden werden. Zusätzlich umfasst die Rohrhalterungsvorrichtung noch eine Konsole, welche an der Wand befestigbar ist und an welcher die beiden Befestigungsteile montierbar sind. Diese werden also mittels der gemeinsamen Konsole an der Fläche angebracht,

Somit können zwei Rohre an der Fläche gehalten werden, wobei nur ein einziges Befestigungsmittel mit der Fläche notwendig ist. Die Konsole (bzw. die Anordnung mehrerer Konsolen entlang der Rohrleitungen) gewährleistet einen konstanten Abstand der Leitungen und trägt somit zu einem ästhetischen Erscheinungsbild der verlegten Rohrleitungen bei.

Ein Werkzeug zum Lösen des Clip-Mechanismus einer Rohrhalterungsvorrichtung umfasst einen Dorn, welcher zum Lösen des Clip-Mechanismus in die Öffnung des Befestigungsteils einführbar ist.

Ein Verfahren zum Befestigen eines Rohres an einer Fläche umfasst folgende Schritte:
a) Anbringen eines Befestigungsteils (10) an der Fläche (50), wobei
   a1) eine Stockschraube mit ihrem Holz- bzw. Dübelgewinde in einem in der Wand angebrachten Dübel verschraubt wird; und
   a2) anschliessend der Befestigungsteil mit einem an einem Anschlag im Innenraum ausgebildeten Innengewinde auf ein metrisches Aussengewinde der Stockschraube aufgeschraubt wird;
b) Umschliessen des Rohrs (30) durch einen Rohrhalteteil (20);
c) Verbinden des das Rohr (30) umschliessenden Rohrhalteteils (20) mit dem an der Fläche (50) angebrachten Befestigungsteil (10) durch einen Clip-Mechanismus (15, 21).

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Schrägansicht der erfindungsgemässen Rohrhalterungsvorrichtung;
- Fig. 2: eine Schrägansicht der Rohrhalterungsvorrichtung mit einem gehaltenen Rohr;
- Fig. 3A: einen horizontalen Querschnitt entlang der Längsachse des Befestigungsteils einer Rohrhalterungsvorrichtung ohne Innengewinde;
- Fig. 3B: einen vertikalen Querschnitt entlang der Längsachse des Befestigungsteils;
- Fig. 4: einen horizontalen Querschnitt des Rohrhalteteils;
- Fig. 5: einen horizontalen Querschnitt der zusammengesetzten Rohrhalterungsvorrichtung;
- Fig.6: einen horizontalen Querschnitt einer ersten Ausführungsform der erfindungsgemässen Rohrhalterungsvorrichtung;
- Fig. 7: einen horizontalen Querschnitt einer erfindungsgemässen Rohrhalterungsvorrichtung für zwei Rohre;
- Fig. 8: eine Draufsicht auf eine Konsole der Rohrhalterungsvorrichtung für zwei Rohre;
- Fig. 9: einen horizontalen Querschnitt einer zweiten Ausführungsform der Rohrhalterungsvorrichtung;
- Fig. 10: eine Seitenansicht der Befestigungsvorrichtung der zweiten Ausführungsform.
- Fig. 11A: einen horizontalen Querschnitt einer dritten Ausführungsform der Rohrhalterungsvorrichtung; und
- Fig. 11 B: eine Schrägansicht der dritten Ausführungsform.

Grundsätzlich sind in den Figuren gleiche Teile mit gleichen Bezugszeichen versehen.

### Wege zur Ausführung der Erfindung

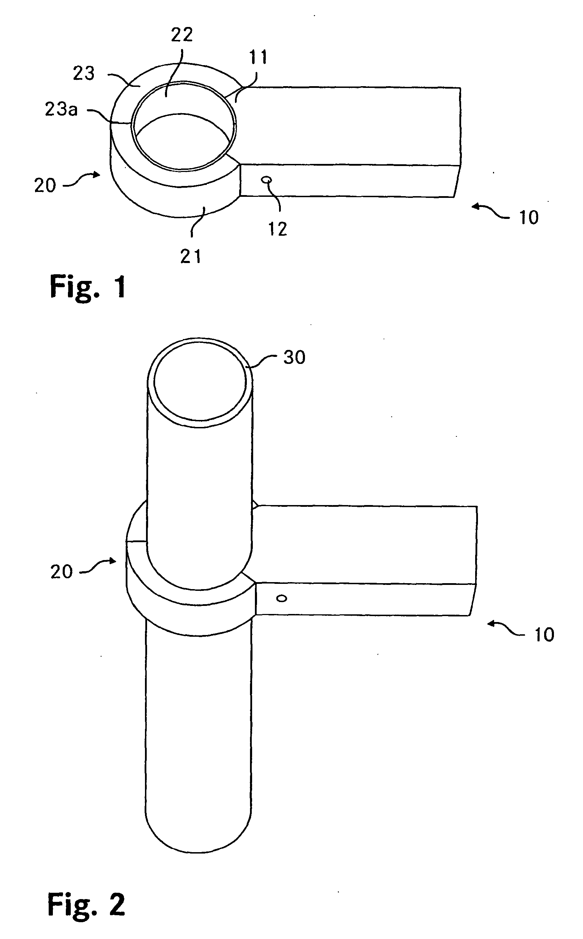

Die Figur 1 zeigt eine Schrägansicht einer erfindungsgemässen Rohrhalterungsvorrichtung. Die Rohrhalterungsvorrichtung ist zusammengesetzt aus dem Befestigungsteil 10 und dem Rohrhalteteil 20. Der Befestigungsteil 10 wird durch ein Profilrohr aus Chromstahlblech mit rechteckigem Querschnitt gebildet. An seinem vorderen Ende weist der Befestigungsteil 10 einen Anschlussbereich 11 auf, dessen Kontur dem Umfang eines aufzunehmenden Rohrs angepasst ist. Die Kanten des Befestigungsteils 10 sind abgerundet. Seitlich, nahe des Anschlussbereichs 11 weist der Befestigungsteil 10 beidseitig je eine kleine kreisförmige Öffnung 12 auf, in welche ein Werkzeug zum Trennen des Rohrhalteteils 20 vom Befestigungsteil 10 eingeführt werden kann.

Der Rohrhalteteil 20 ist im Wesentlichen ringförmig. Er umfasst eine Schelle 21 aus Stahlblech, welche den äusseren Mantel des Rohrhalteteils 20 bildet. Innerhalb der Schelle 21 ist eine im Wesentlichen ringförmige Einlage 22 aus Lochgummi gehalten. Die Schelle 21 und die Einlage 22 sind auf ihrer oberen und ihrer unteren Seite je durch eine ringförmige Abdeckung 23 abgedeckt. Die Abdeckung 23 umfasst am äusseren Ende des Rohrhalteteils 20 einen radialen Schlitz 23a. Dadurch wird eine Deformation des Rohrhalteteils 20 ermöglicht, welche erlaubt, dass der Rohrhalteteil 20 vor dem Anbringen an den Befestigungsteil 10 quer zur Rohr-Längsachse über ein Rohr geschoben werden kann. Bei dieser Deformation werden die Schelle 21 und die Einlage 22 elastisch verformt, während der Schlitz 23a in der Abdeckung 23 gleichsam als Scharnier wirkt, so dass die Schenkel der Abdeckung 23 beidseitig weggeklappt werden können.

Die Figur 2 zeigt eine Schrägansicht der Rohrhalterungsvorrichtung mit einem darin gehaltenen Rohr. Das Rohr 30 ist innerhalb des Rohrhalteteils 20 gehalten und steht senkrecht zur Hauptfläche des Befestigungsteils 10. Die Kontaktfläche des Rohrs 30 mit dem Rohrhalteteil 20 wird durch die Innenseite der Einlage 22 aus Gummi gebildet und weist eine hohe Haftreibungszahl auf. Das Rohr 30 ist also auch bei vertikaler Befestigung in der Rohrhalterungsvorrichtung gehalten und kann nicht rutschen. Der Befestigungsteil 10 kann an einer Wand oder einer anderen Fläche, z. B. einer Decke, befestigt werden.

Die Rohrhalterungsvorrichtung wirkt optisch geschlossen, es sind keinerlei Befestigungselemente offen sichtbar oder zugänglich.

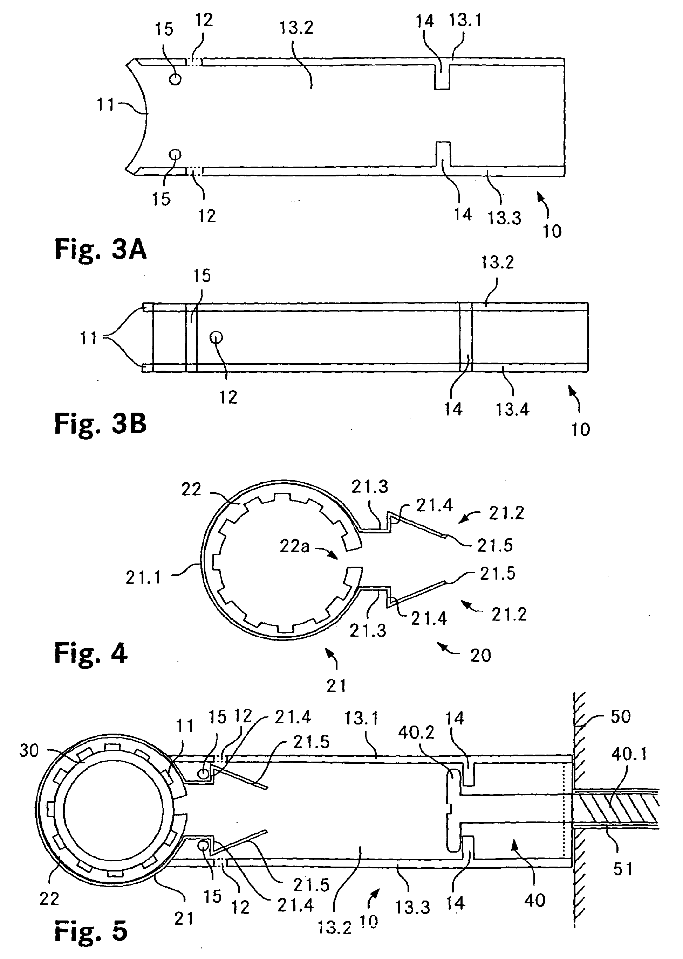

Die Figuren 3A und 3B zeigen einen horizontalen bzw. vertikalen Querschnitt entlang der Längsachse des Befestigungsteils einer Rohrhalterungsvorrichtung ohne Innengewinde. Dieser Befestigungsteil ist somit nicht erfindungsgemäss, wird jedoch zum besseren Verständnis der Erfindung im Folgenden beschrieben. Der Befestigungsteil 10 ist im Wesentlichen aus vier Wandteilen 13.1, 13.2, 13.3, 13.4 zusammengesetzt, welche jeweils rechtwinklig aneinander anschliessen, so dass sich senkrecht zur Längsachse des Befestigungsteils 10 ein rechteckiger Querschnitt ergibt. Der obere und untere Wandteil 13.2, 13.4 weisen im Anschlussbereich 11 des Befestigungsteils 10 eine konkave Einbuchtung auf, welche an den Aussendurchmesser des Rohrs angepasst ist. Die kreisförmigen Öffnungen 12 befinden sich in den seitlichen Wandteilen 13.1, 13.3 jeweils auf gleicher Höhe und gleich weit vom Anschlussbereich 11 entfernt. Die seitlichen Wandteile 13.1, 13.3 weisen zudem weiter entfernt vom Anschlussbereich 11 senkrecht nach innen ragende Flansche 14 auf, welche als Auflage für einen Schraubenkopf einer Schraube dienen können, mit welcher der Befestigungsteil 10 an einer Wand befestigt werden kann.

Weiter sind zwischen dem oberen und unteren Wandteil 13.2, 13.4 senkrecht zwei Stifte 15 gehalten, welche nahe der seitlichen Wandteile 13.1 ,13.3, zwischen den Öffnungen 12 in den seitlichen Wandteilen 13.2, 13.4 und dem Anschlussbereich 11 angeordnet sind. Der obere und untere Wandteil 13.2, 13.4 ragen beim Anschlussbereich 11 über die seitlichen Wandteile 13.1, 13.3 hinaus, so dass sie eine Abdeckung für einen Teil des Rohrhalteteils 20 bilden.

Die Figur 4 zeigt einen horizontalen Querschnitt des Rohrhalteteils der Rohrhalterungsvorrichtung. Der Rohrhalteteil 20 wird durch die Schelle 21 und die darin aufgenommene Einlage 22 aus Gummi gebildet. Die Schelle 21 weist einen Haltebereich 21.1 zur Aufnahme des Rohrs sowie federnde Laschen 21.2 auf, welche unmittelbar an den Haltebereich 21.1 anschliessen und einstückig damit aus Stahlblech gefertigt sind. Der Haltebereich 21.1 wird durch einen Blechstreifen gebildet, welcher senkrecht zu seiner Hauptfläche in die Form eines Kreisbogens mit einem Winkel von ca. 315 ° gebogen ist. Die federnden Laschen 21.2 sind beide gleichartig ausgebildet und weisen jeweils drei im Wesentlichen gerade Abschnitte auf, welche unmittelbar aneinander anschliessen: einen vorderen Teil 21.3, einen Stufenteil 21.4 und einen Betätigungsteil 21.5. Im Haltebereich 21.1 entspricht die Breite des Blechstreifens der Höhe des Befestigungsteils 10. Im Bereich der federnden Laschen 21.2 ist die Breite etwas geringer, damit die Laschen 21.2 beim Anschlussbereich 11 in den Befestigungsteil 10 eingeführt werden können. Die vorderen Teile 21.3 schliessen unmittelbar an die Enden des Haltebereichs 21.1 an und weisen symmetrisch und parallel zueinander vom Haltebereich 21.1 weg. Die Stufenteile 21.4 schliessen jeweils rechtwinklig an die vorderen Teile 21.3 an und weisen nach aussen. Die Betätigungsteile 21.5 wiederum schliessen mit den Stufenteilen 21.4 einen Winkel von ca. 60 ° ein und weisen schräg nach innen.

Die Einlage 22 aus Lochgummi hat die Form eines Kreisringabschnitts und weist an ihrem hinteren Ende einen Spalt 22a auf, so dass ein Zusammendrücken des Rohrhalteteils 20 nicht durch die Einlage 22 behindert wird. Im Querschnitt weist die Einlage 22 beabstandete, nicht durchgehende Ausnehmungen ("Löcher") auf. Der Aussendurchmesser der Einlage 22 aus Gummi ist dem Innendurchmesser der Schelle 21 angepasst, der Innendurchmesser entspricht dem Aussendurchmesser des aufzunehmenden Rohrs. Durch Austauschen der Einlage 22 lässt sich der Rohrhalteteil 20 in gewissen Grenzen verschiedenen Rohraussendurchmessern anpassen.

Die Figur 5 zeigt einen horizontalen Querschnitt der zusammengesetzten Rohrhalterungsvorrichtung. Die Montage der Rohrhalterungsvorrichtung verläuft wie folgt. Als Erstes wird der Befestigungsteil 10 an der Wand 50 (oder einer anderen Fläche, wie z. B. einer Decke) befestigt. Dazu wird eine Schraube 40 von vorne in den Befestigungsteil 10 eingeführt. Durch den Zwischenraum zwischen den Flanschen 14 kann der Gewindeteil 40.1 der Schraube 40 nach hinten aus dem Befestigungsteil 10 hinaus geführt werden, während der Kopf 40.2 der Schraube 40 an den seitlichen Flanschen 14 anschlägt. Zur Veränderung des Abstands des Rohrs 30 von der Wand 50 kann der hintere Teil des Befestigungsteils 10, d. h. der hinter den Flanschen 14 liegende Bereich, gekürzt werden. Der Befestigungsteil 10 wird also z. B. mit einer Länge geliefert, welche dem maximal üblichen Rohrabstand entspricht. Ein geringerer Rohrabstand lässt sich durch Kürzen des Befestigungsteils auf einfache Weise erreichen. Dadurch, dass für verschiedene Rohrabstände nur ein Typ des Befestigungsteils 10 vorrätig sein muss, können die Lagerhaltungskosten gesenkt werden.

Die in den Befestigungsteil 10 eingeführte Schraube 40 wird nun mit einem üblichen Schraubendreher im Dübel 51, welcher an der gewünschten Befestigungsstelle in der Wand 50 angebracht worden ist, verschraubt. Sobald der Kopf 40.2 der Schraube 40 an den Flanschen 14 anliegt, ergibt sich eine Spannwirkung, welche gewährleistet, dass der Befestigungsteil 10 sicher an der Wand gehalten ist. Die hinteren Enden der Wandteile 13 des Befestigungsteils 10 sind an der Wand 50 abgestützt, so dass die Längsachse des Befestigungsteils 10 senkrecht zur Wand 50 orientiert ist. Zu diesem Zeitpunkt lässt sich der Befestigungsteil 10 lediglich noch um seine Längsachse drehen. Diese Verdrehbarkeit erleichtert das nachfolgende Anbringen des Rohrhalteteils 20.

Als nächstes wird nun das Rohr 30 so vor dem Befestigungsteil 10 positioniert, wie es schliesslich durch die Rohrhalterungsvorrichtung gehalten werden soll. Abhängig vom Aussendurchmesser des Rohrs 30 wird ein Rohrhalteteil 20 mit einem entsprechenden Innendurchmesser gewählt. Verschiedene Rohrhalteteile mit unterschiedlichen Innendurchmessern lassen sich problemlos an demselben Befestigungsteil 10 anbringen. Der ausgewählte Rohrhalteteil 20 wird durch elastisches Aufbiegen der Schelle 21 und der Einlage 22 temporär erweitert, so dass er quer zur Rohrlängsachse über das Rohr 30 geschoben werden kann. Sobald dies geschehen ist, kann der Betätigungsteil 21.5 des Rohrhalteteils 20 in den Befestigungsteil 10 eingeschoben werden.

Durch die senkrechten Stifte 15 werden die Betätigungsteile 21.5 beim Einschieben des Rohrhalteteils 20 elastisch nach innen gebogen. Dies geschieht aufgrund der schräg nach innen weisenden Anordnung der Betätigungsteile 21.5 allmählich und erfordert keinen grossen Kraftaufwand. Das Einschieben wird solange fortgesetzt, bis die Stufenteile 21.4 die Stifte 15 passiert haben. In diesem Moment federn die nun nicht mehr an den Stiften 15 anliegenden Betätigungsteile 21.5 wieder nach aussen. Gleichzeitig stösst die Schelle 22 am Anschlussbereich 11 des Befestigungsteils 10 an. Der Rohrhalteteil 20 ist nun gleichzeitig durch die Stufenteile 21.4 hinter den Stiften 15 und durch die Schelle 22 am Anschlussbereich 11 gehalten und ist somit unbeweglich am Befestigungsteil 10 und dadurch auch an der Wand angebracht. Ein Zurückziehen des Rohrhalteteils 20 aus dem Befestigungsteil 10 ist nicht ohne Weiteres möglich, weil die federnden Laschen 21.2 aufgrund der senkrecht nach aussen weisenden Stufenteile 21.4 so hinter den Stiften 15 gehalten sind, dass ein Zurückziehen nicht dazu führt, dass die Laschen 21.2 nach innen gebogen werden.

Der Rohrhalteteil 20 kann aber leicht vom Befestigungsteil 10 gelöst werden, indem in die seitlichen Öffnungen 12 jeweils ein gerader, dünner Dorn eingeführt wird. Durch diesen können die Betätigungsteile 21.5 nach innen gedrückt werden, so dass ein Herausziehen des Rohrhalteteils 20 ermöglicht wird, sobald die Stufenteile 21.4 nicht mehr hinter den Stiften 15 gehalten sind. Üblicherweise ist ein Zurückziehen des Rohrhalteteils 20 nicht einmal erforderlich, weil durch weiteres Eindrücken der Dorne gegen die nach hinten zulaufenden Betätigungsteile 21.5 und durch die Elastizität der Betätigungsteile 21.5 selbst der Rohrhalteteil 20 automatisch aus dem Befestigungsteil 10 heraus gestossen wird.

Das Werkzeug zum Lösen des Rohrhalteteils 20 ist zweckmässigerweise zangenartig aufgebaut, so dass zwei Dorne gleichzeitig in beide seitlichen Öffnungen 12 eingeführt werden können.

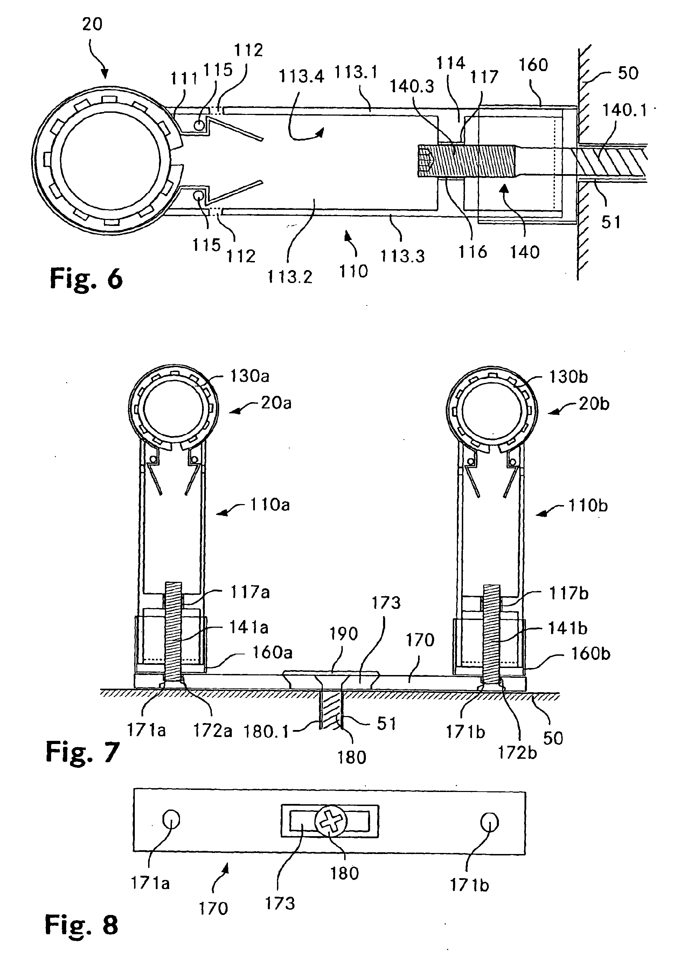

Die Figur 6 zeigt einen horizontalen Querschnitt einer ersten Ausführungsform der Rohrhalterungsvorrichtung. Der Rohrhalteteil 20 entspricht demjenigen des vorstehend erläuterten Beispiels; es wird deshalb im Folgenden nicht näher darauf eingegangen. Der Befestigungsteil 110 ist in seiner Aussenansicht nicht vom Befestigungsteil des Beispiels zu unterscheiden. So ist er wiederum im Wesentlichen aus vier Wandteilen 113.1, 113.2, 113.3, 113.4 gebildet, welche jeweils rechtwinklig aneinander anschliessen, so dass sich senkrecht zur Längsachse des Befestigungsteils 110 ein rechteckiger Querschnitt ergibt. Der obere und untere Wandteil 113.2, 113.4 weisen im Anschlussbereich 111 des Befestigungsteils 110 eine konkave Einbuchtung auf, welche an den Aussendurchmesser des Rohrs angepasst ist. Zwei kreisförmige Öffnungen 112 befinden sich in den seitlichen Wandteilen 113.1, 113.3 jeweils auf gleicher Höhe und gleich weit vom Anschlussbereich 111 entfernt.

Weiter sind zwischen dem oberen und unteren Wandteil 113.2, 113.4 senkrecht zwei Stifte 115 gehalten, welche nahe der seitlichen Wandteile 113.1, 113.3, zwischen den Öffnungen 112 in den seitlichen Wandteilen 113.2, 113.4 und dem Anschlussbereich 111 angeordnet sind. Der obere und untere Wandteil 113.2, 113.4 ragen beim Anschlussbereich 111 wiederum über die seitlichen Wandteile 113.1, 113.3 hinaus, so dass sie eine Abdeckung für einen Teil des Rohrhalteteils 20 bilden.

Innerhalb der Wandteile 113.1, 113.2, 113.3, 113.4 ist nun weiter entfernt vom Anschlussbereich ein umlaufender Flansch 114 ausgebildet, welcher in der Symmetrieachse des Befestigungsteils 110 eine runde, durchgehende Öffnung 116 bildet. In der Wandung dieser Öffnung 116 ist ein metrisches Innengewinde 117 eingeschnitten, beispielsweise der Dimension M8. Dieses Innengewinde kann mit dem entsprechenden Aussengewinde 140.3 einer Stockschraube 140 zusammenwirken. Diese wird mit ihrem Holz- bzw. Dübelgewinde 140.1 im Dübel 51, welcher an der gewünschten Befestigungsstelle in der Wand 50 angebracht worden ist, verschraubt. Anschliessend kann der Befestigungsteil 110 mit seinem Innengewinde 117 auf das metrische Aussengewinde 140.3 der Stockschraube 140 aufgeschraubt werden.

Die Rohrhalterungsvorrichtung weist im Weiteren eine Abdeckhülse 160 auf, welche einen dem Befestigungsteil 110 angepassten rechteckigen Querschnitt hat und durch vier Wandteile gebildet ist, welche auf den entsprechenden Wandteilen 113.1, 113.2, 113.3, 113.4 des Befestigungsteil 110 gleiten können. Die Abdeckhülse 160 wird zunächst ganz auf den Befestigungsteil 110 aufgeschoben und kann nach dem Anbringen des Befestigungsteils 110 an der Stockschraube 140 bis ganz an die Wand 50 hinan geschoben werden (wie in der Figur 6 dargestellt), so dass sich ein einheitliches Erscheinungsbild ohne störende Lücken ergibt.

Die Figur 7 zeigt einen horizontalen Querschnitt einer Rohrhalterungsvorrichtung für zwei Rohre. Die Vorrichtung umfasst zwei Rohrhalterungen mit Rohrhalteteilen 20a, 20b und Befestigungsteilen 110a, 110b, welche wie oben im Zusammenhang mit der Figur 6 beschrieben ausgebildet sind. Auf diese wird im Folgenden nicht mehr näher eingegangen. Beide Befestigungsteile 110a, 110b sind an einer Konsole 170 angebracht, welche mit der Wand 50 verschraubt ist.

Die Figur 8 ist eine Draufsicht auf die Konsole 170. Die Konsole 170 hat die Form einer rechteckigen Platte, deren Breite der Höhe der Befestigungsteile 110a, 110b entspricht. Die Länge der Konsole 170 ergibt sich aus dem Abstand der beiden Rohre und ist so gewählt, dass die Befestigungsteile 110a, 110b mit ihren jeweils äusseren Kanten bündig auf der Konsole 170 aufliegen können. In passendem Abstand zu den Aussenkanten der Konsole sind Löcher 171a, 171b mit metrischen Innengewinden 172a, 172b vorgesehen, deren Durchmesser dem Durchmesser der Innengewinde 117a, 117b der Befestigungsteile 110a, 110b entspricht.

Entlang der Längsachse weist die Konsole 170 im Bereich ihrer Mitte einen Längsschlitz 173 auf, dessen Breite dem Schaftdurchmesser einer Senkkopfschraube 180 mit Holz- bzw. Dübelgewinde 180.1 entspricht. Der Senkkopf liegt mit seinem konischen unteren Teil auf entsprechend geneigten seitlichen Kanten des Längsschlitzes 173 auf. Diese Kanten sind bezüglich der Frontfläche der Konsole 170 zurückversetzt, so dass der Senkkopf bei vollständig eingeschraubter Senkkopfschraube 180 nicht über die Frontfläche der Konsole 170 herausragt. Der Längsschlitz 173 erlaubt eine gewisse Anpassung der Position der Konsole 170 in einer Querrichtung bezüglich der zu haltenden Rohre 130a, 130b. Wenn beispielsweise der Dübel 51 für die Senkkopfschraube 180 nicht genau positioniert ist, kann der seitliche Positionsfehler dank des Längsschlitzes 173 ausgeglichen werden. Durch Festziehen der Senkkopfschraube wird die Konsole 170 an der gewünschten Position fixiert. Verspannungen der Rohrleitungen werden somit vermieden. Ein geringfügiger Positionsfehler in Richtung der Rohre 130a, 130b ist nicht kritisch, weil in diesem Fall die Konsole 170 mit den Befestigungsteilen 110a, 110b geringfügig entlang der Rohre 130a, 130b verschoben werden kann.

Nach erfolgter Befestigung der Konsole 170 an der Wand 50 können der Längsschlitz 173 und die Senkkopfschraube 180 mittels einer Abdeckung 190 abgedeckt werden (siehe Figur 7), welche beispielsweise innerhalb der Ränder des Längsschlitzes 173 festklemmbar ist.

Zur Anbringung der Rohrhalterungsvorrichtung für zwei Rohre werden als erstes die metrischen Schrauben 141a, 141b von hinten in die Löcher 171a, 171b der Konsole 170 eingeschraubt. Anschliessend wird bevorzugt die Konsole 170 an der Wand 50 befestigt, worauf die Befestigungsteile 171a, 171b mit Ihren Innengewinden 117a, 117b auf die metrischen Schrauben 141a, 141b aufgeschraubt werden können. Schliesslich werden die Abdeckhülsen 160a, 160b bis an die Konsole 170 hinan geschoben.

Die Konsole 170 ist auch mit Rohrschellen verwendbar, welche kein metrisches Innengewinde aufweisen (siehe z. B. Figuren 3-5). Zur Montage der entsprechenden Befestigungsteile an der Konsole 170 werden in diesem Fall genau abgelängte metrische Schrauben verwendet, deren Kopf auf den nach innen ragenden Flanschen abgestützt wird, sobald die Schrauben von vorne ganz in die Löcher 171a, 171b eingeschraubt sind.

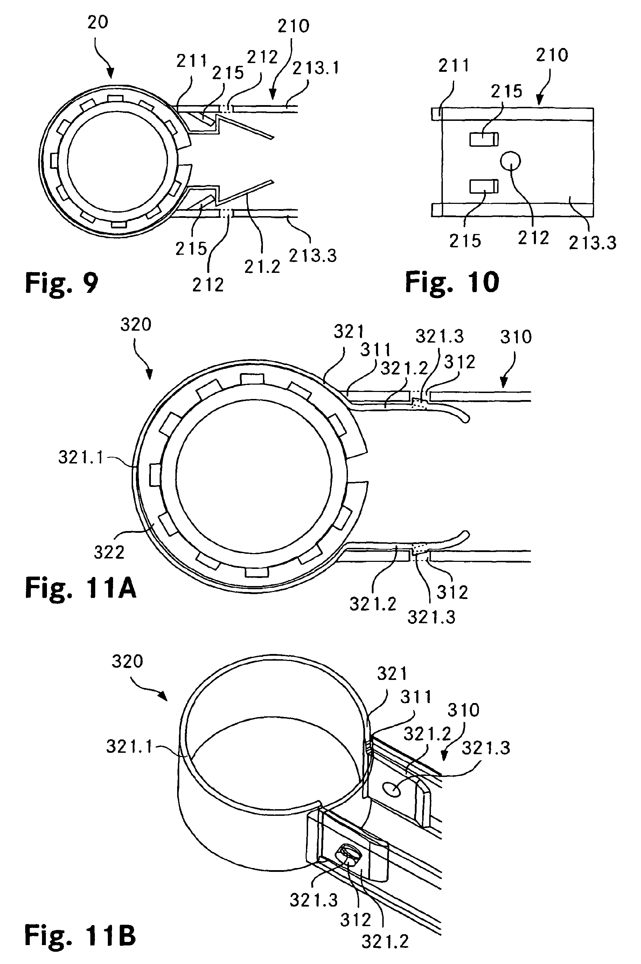

Die Figur 9 zeigt einen horizontalen Querschnitt einer zweiten Ausführungsform der Rohrhalterungsvorrichtung, die Figur 10 zeigt eine Seitenansicht des vordersten Abschnitts des Befestigungsteils dieser Ausführungsform. Die Rohrhalterungsvorrichtung entspricht weitgehend der bereits beschriebenen ersten Ausführungsform und zeichnet sich lediglich durch eine Modifikation des Clip-Mechanismus am Befestigungsteil 210 aus, der Rohrhalteteil 20 ist unverändert. Anstelle der senkrechten Stifte sind am Befestigungsteil 210 beidseitig je zwei von den seitlichen Wandteilen 213.1, 213.3 in den Innenraum des Befestigungsteils 210 ragende Laschen 215 vorgesehen, welche am dem Anschlussbereich 211 benachbarten Ende an den Wandteilen 213.1, 213.3 gehalten sind. Bezüglich der seitlichen Öffnung 212 ist jeweils eine der Laschen 215 höher und eine tiefer angeordnet.

Die Laschen 215 lassen sich einfach herstellen durch Erzeugen U-förmiger Ausschnitte in den seitlichen Wandteilen 213.1, 213.3 und Einbiegen der entstehenden Laschenteile in den Innenraum des Befestigungsteils 210. Beim Einschieben des Rohrhalteteils 20 stellen die Laschen 215 eine hervorragende Führung für die federnden Laschen 21.2 des Rohrhalteteils 20 sicher, und im eingerasteten Zustand ist der Rohrhalteteil 20 fest hinter den Laschen 215 am Befestigungsteil 210 gehalten. Zwei Laschen 215 lassen sich einfach unterhalb und oberhalb der Öffnung 212 herstellen, derart dass zwischen den Laschen 215 und der Öffnung 212 genügend Wandmaterial verbleibt. Anstelle von zwei Laschen kann auch nur eine einzige Lasche vorgesehen sein oder mehr als zwei übereinander positionierte Laschen.

Die Figuren 11A, B zeigen einen horizontalen Querschnitt einer dritten Ausführungsform der Rohrhalterungsvorrichtung und eine entsprechende Schrägansicht. Von den vorher beschriebenen Ausführungsformen unterscheidet sich die dritte Ausführungsform in einer unterschiedlichen Ausbildung des Clip-Mechanismus zwischen dem Rohrhalteteil 320 und dem Befestigungsteil 310. Der Befestigungsteil 310 entspricht weitgehend einer beliebigen der bereits gezeigten Ausführungen (mit oder ohne Innengewinde), es fehlen aber die senkrechten Stifte des Clip-Mechanismus. Der Rohrhalteteil 320 wird wiederum durch eine Schelle 321 und eine darin aufgenommene Einlage 322 aus Gummi gebildet. Der Haltebereich 321.1 der Schelle 321 zur Aufnahme des Rohrs ist gleich ausgebildet wie bei den bereits dargestellten Ausführungen.

Federnde Laschen 321.2 schliessen wiederum unmittelbar an den Haltebereich 321.1 an und sind einstückig damit aus Stahlblech gefertigt. Die federnden Laschen 321.2 sind nun aber unterschiedlich zu den anderen Ausführungsformen ausgebildet. Die beidseitig an den Haltebereich 321.1 anschliessenden Abschnitte verlaufen zunächst parallel zueinander, wobei der Abstand der Laschen 321.2 dem Innenquerschnitt des Befestigungsteils 310 angepasst ist, so dass sich die federnden Laschen unter einer geringfügigen elastischen Verformung passend in den Befestigungsteil 310 einführen lassen. An ihren Enden laufen die federnden Laschen 321. 2 leicht nach innen aufeinander zu. Die anfängliche Breite der federnden Laschen 321.2 am Übergang zum Haltebereich 321.1 ist gegenüber der Breite des Haltebereichs 321.1 derart verringert, dass sich die Laschen 321.2 in den Befestigungsteil 310 einführen lassen. Vom Haltebereich 321.1 zu den Laschenenden nimmt die Breite der federnden Laschen 321.2 kontinuierlich ab, so dass sich die Laschen 321.2 leicht in den Befestigungsteil 310 einführen lassen und automatisch darin zentriert werden.

Die Laschen 321.2 weisen auf ihrer Aussenseite jeweils eine kreisförmige Erhebung 321.3 auf, welche derart angeordnet ist, dass sie im eingeschobenen Zustand mit der jeweiligen Öffnung 312 des Befestigungsteils 310 zusammenwirken kann. Die Höhe der Erhebung über der Aussenseite der Laschen 321.2 nimmt dabei von den Enden der Laschen 321.2 zum Haltebereich 321.1 hin zu. Am vorderen Ende fällt die Erhebung 321.3 steil zur Lasche 321.2 hin ab, so dass ein keilförmiger Querschnitt gebildet ist. Die Erhebungen 321.3 können durch einen Stanzvorgang von der Innenseite der Laschen 321.2 her einfach erzeugt werden.

Beim Einschieben des Rohrhalteteils 320 in den Befestigungsteil 310 werden die zulaufenden Enden der federnden Laschen 321.2 elastisch nach innen gebogen. Dies geschieht aufgrund der aufeinander zulaufenden Anordnung der Enden allmählich und erfordert keinen grossen Kraftaufwand. Auch die ausgestanzten Erhebungen 321.3 sind derart ausgebildet, dass sie die Laschen 321.2 allmählich weiter nach innen drücken, bis die Erhebungen 321.3 auf den Innenseiten des Befestigungsteils 310 vollständig aufliegen.

Das Einschieben wird solange fortgesetzt, bis die Erhebungen 321.3 die Öffnungen 312 erreichen und wieder nach aussen federn. Die Erhebungen 321.3 rasten also in die Öffnungen 312 ein. Der Rohrhalteteil 320 ist so dimensioniert, dass dieses Einrasten zu demselben Zeitpunkt passiert, in dem die Schelle 322 am Anschlussbereich 311 des Befestigungsteils 310 anstösst. So ist der Rohrhalteteil 320 gleichzeitig durch die eingerasteten Erhebungen 321.3 und durch die Schelle 322 am Anschlussbereich 311 gehalten und somit unbeweglich am Befestigungsteil 310 und dadurch auch an der Wand angebracht. Ein Zurückziehen des Rohrhalteteils 320 aus dem Befestigungsteil 310 ist nicht ohne weiteres möglich, weil die federnden Laschen 321.2 aufgrund des keilförmigen Querschnitts der Erhebungen 321.3 so in den Öffnungen 312 gehalten sind, dass ein Zurückziehen stark erschwert ist. Wiederum kann aber der Rohrhalteteil 320 leicht vom Befestigungsteil 310 gelöst werden, indem in die Öffnungen 312 jeweils ein Dorn eingeführt wird.

Bei einer weichen Wandoberfläche kann eine Unterlegeplatte zwischen dem Befestigungsteil und der Wand angeordnet werden mit einem Loch, durch welches die Schraube hindurchtreten kann. Die Grösse der Unterlegeplatte entspricht zumindest dem Querschnitt des Befestigungsteils, so dass der Befestigungsteil durch die Unterlegeplatte auf der Wand abgestützt ist. So wird verhindert, dass die Wandteile aufgrund ihres geringen Querschnitts in die weiche Wandoberfläche eindringen. Bevorzugt ist die Unterlegeplatte rund, mit einem Durchmesser, welcher mindestens der Diagonalen des Querschnitts des Befestigungsteils entspricht. Auf der Frontseite der Unterlegeplatte kann ein Bereich vorgesehen sein, an welchem der Befestigungsteil zentriert werden kann, z. B. ein Bereich mit reduzierter Wandstärke, dessen Ausmasse dem Aussenquerschnitt des Befestigungsteils 13 entsprechen oder - bevorzugt - ein Bereich mit einer Aufbördelung, deren Ausmasse dem Innenquerschnitt des Befestigungsteils entsprechen. Eine solche Aufbördelung lässt sich einfach herstellen, indem sie von der Rückseite der Unterlegeplatte nach vorne gepresst wird.

Die verschiedenen Aspekte der dargestellten Ausführungsformen lassen sich miteinander kombinieren, so kann z. B. eine Rohrhalterungsvorrichtung einen Clip-Mechanismus einer der Ausführungsformen und eine Wandbefestigung einer anderen Ausführungsform aufweisen.

Der Clip-Mechanismus zwischen dem Befestigungsteil und dem Rohrhalteteil kann auch andersartig ausgeführt werden, insbesondere mit nur einer federnden Lasche und einem entsprechenden Anschlag oder mit mehr als zwei Laschen und Anschlägen. Die Form der Lasche und der Anschläge kann ebenfalls variiert werden. Beispielsweise kann anstelle eines Betätigungsteils ein Anschlag vorgesehen werden, welcher sich konisch erweitert und so den Stufenteil sukzessive elastisch nach innen biegt. Das Lösen des Rohrhalteteils kann in diesem Fall und auch in anderen Fällen dadurch erfolgen, dass der Anschlag beweglich ausgeführt ist und z. B. nach aussen zurückgezogen werden kann.

Soll die Verwendbarkeit unterschiedlicher Rohrhalteteile an demselben Befestigungsteil noch verbessert werden, kann der Anschlussbereich des Befestigungsteils gerade verlaufen, wobei der Rohrhalteteil ein Kontaktelement aufweist, welches auf seiner Innenseite - entsprechend dem Rohraussendurchmesser - eine konkave Form aufweist und auf seiner Aussenseite eine gerade Fläche zum Kontaktieren des Anschlussbereichs am Befestigungsteil.

Der Rohrhalteteil kann so ausgebildet sein, dass gleichzeitig mehrere parallel angeordnete Rohre gehalten werden können, z. B. ein Kaltwasser- und ein Warmwasserrohr. Dazu umfasst er mit Vorteil mehrere Schellen, welche symmetrisch an einem gemeinsamen Verbindungsteil gehalten sind.

Schliesslich ist die erfindungsgemässe Konstruktion mit einer Vielzahl von Varianten vereinbar, bei welchen die Form und die Optik der Rohrhalterungsvorrichtung gestalterischen Ideen nach den Ansprüchen angepasst sind.

Zusammenfassend ist festzustellen, dass durch die Erfindung eine Rohrhalterungsvorrichtung geschaffen wird, welche schnell und einfach montierbar ist und optisch sowie strukturell für das sichtbare Verlegen von Rohren in Wohn- und Geschäftsräumen geeignet ist.

## Patentansprüche

1. Rohrhalterungsvorrichtung zum Befestigen eines Rohrs (30) an einer Fläche (50) mit
a) einem Befestigungsteil (110; 110a; 210; 310), welcher an der Fläche (50) anbringbar ist; und
b) einem Rohrhalteteil (20; 20a; 320), welcher zum Halten des Rohrs (30) ausgebildet ist und mit dem Befestigungsteil (10) durch einen Clip-Mechanismus (115, 21; 215, 21; 312, 321.3) verbindbar ist;
wobei
c) der Befestigungsteil (110; 210; 310) röhrenförmig ist und mittels einer vollständig in einem Innenraum des Befestigungsteils (110) aufgenommenen Schraube (140) so an der Fläche (50) befestigbar ist, dass eine Hauptachse des Befestigungsteils (110; 210; 310) senkrecht zur Fläche (50) orientiert ist;
d) der Innenraum des Befestigungsteils (110) einen Anschlag (114) für einen Schraubenkopf (40.2) aufweist,
**dadurch gekennzeichnet, dass**
e) am Anschlag (114) ein Innengewinde (117) zur Aufnahme der Schraube (140) mit einem passenden Aussengewinde (140.3), insbesondere für eine Stockschraube, ausgebildet ist und
f) der Anschlag (14; 114) an mindestens einem von Wänden (13.1, 13.3; 113.1, 113.3) des Befestigungsteils (10; 110) nach innen ragenden Flansch (14; 114) ausgebildet ist, wobei der mindestens eine Flansch (14; 114) von einem in befestigtem Zustand der Fläche (50) zugewandten Ende des Befestigungsteils (10; 110) beabstandet ist.

2. Rohrhalterungsvorrichtung nach Anspruch 1, **gekennzeichnet durch** eine Abdeckhülse (160), welche derart ausgebildet ist, dass sie eng umschliessend derart auf den röhrenförmigen Befestigungsteil (110) aufschiebbar ist, dass ein Zwischenraum zwischen dem Befestigungsteil (110) und der Fläche (50) abgeschlossen werden kann.

3. Rohrhalterungsvorrichtung nach einem der Ansprüche 1 bis 2, **dadurch gekennzeichnet, dass** der Rohrhalteteil (20) im Wesentlichen durch eine Schelle (21; 321) gebildet ist, welche das Rohr (30) umschliessend aufnehmen kann, wobei die Schelle (21; 321) quer zu einer Hauptachse des Rohrs (30) über das Rohr (30) schiebbar ist.

4. Rohrhalterungsvorrichtung nach einem der Ansprüche 1 bis 3, **dadurch gekennzeichnet, dass** ein von aussen sichtbarer Teil des Befestigungsteils (110; 210; 310) und/oder des Rohrhalteteils (20; 320) aus, insbesondere oberflächenbehandeltem, Stahlblech gefertigt ist.

5. Rohrhalterungsvorrichtung nach einem der Ansprüche 1 bis 4, **dadurch gekennzeichnet, dass** der Rohrhalteteil (20; 320) an einer Kontaktfläche mit dem Rohr eine Einlage (22; 322) aus Gummi, insbesondere Lochgummi, aufweist.

6. Rohrhalterungsvorrichtung nach Anspruch 5, **dadurch gekennzeichnet, dass** die Einlage (22) an einem ersten und/oder zweiten in Richtung einer Längsachse des aufzunehmenden Rohrs (30) liegenden Ende der Einlage durch eine im Wesentlichen ringförmige, an einen Aussendurchmesser des Rohrs (30) angepassten Abdeckung (23) abgeschlossen ist, wobei die Abdeckung (23) insbesondere geschlitzt ist, um eine Verformung des Rohrhalteteils (20) zu erlauben.

7. Rohrhalterungsvorrichtung nach einem der Ansprüche 1 bis 6, **dadurch gekennzeichnet, dass** der Befestigungsteil (110; 210; 310) mindestens eine seitliche Öffnung (112; 212; 312) zum Einführen eines Werkzeugs zum Lösen des Clip-Mechanismus (115, 21; 215, 21; 312, 321.3) aufweist.

8. Rohrhalterungsvorrichtung nach einem der Ansprüche 1 bis 7, **gekennzeichnet durch**
a) einen zweiten Befestigungsteil (110b);
b) einem zweiten Rohrhalteteil (20b), welcher zum Halten eines zweiten Rohrs ausgebildet ist, wobei der zweite Rohrhalteteil (20b) mit dem zweiten Befestigungsteil (110b) **durch** einen Clip-Mechanismus verbindbar ist;
c) eine Konsole (170), welche an der Wand (50) befestigbar ist und an welcher der Befestigungsteil (110a) und der zweite Befestigungsteil (110b) zur Anbringung an der Fläche (50) montierbar sind.

9. Verfahren zum Befestigen eines Rohres (30) an einer Fläche (50), welches folgende Schritte umfasst:
a) Anbringen eines röhrenförmigen Befestigungsteils (110; 210; 310), welches im Innenraum über einen Anschlag (114) für einen Schraubenkopf verfügt, an der Fläche (50), wobei der Anschlag (14; 114) an mindestens einem von Wänden (13.1, 13.3; 113.1, 113.3) des Befestigungsteils (10; 110) nach innen ragenden Flansch (14; 114) ausgebildet ist, so dass der mindestens eine Flansch (14; 114) von einem in befestigtem Zustand der Fläche (50) zugewandten Ende des Befestigungsteils (10; 110) beabstandet ist, wobei
a1) eine Stockschraube (140) mit ihrem Holz- bzw. Dübelgewinde (140.1) in einem in der Wand (50) angebrachten Dübel (51) verschraubt wird; und
a2) zur Anpassung eines Abstandes zwischen dem Rohr (30) und der Fläche (50) das der Fläche (50) zugewandte Ende des Befestigungsteils (10; 110) bzw. ein hinter dem nach innen ragenden Flansch (14; 114) liegender Bereich des Befestigungsteils (10; 110), gekürzt wird; und
a3) anschliessend der Befestigungsteil (110; 210; 310) von hinten durch ein Innengewinde (117), welches am Anschlag (114) ausgebildet ist, auf ein metrisches Aussengewinde (140.3) der Stockschraube (140) aufgeschraubt wird;
b) Umschliessen des Rohrs durch einen Rohrhalteteil (20; 320);
c) Verbinden des das Rohr (30) umschliessenden Rohrhalteteils (20; 320) mit dem an der Fläche (50) angebrachten Befestigungsteil (10; 110; 210; 310) durch einen Clip-Mechanismus (15, 21; 115, 21; 215, 21; 312, 321.3).

## Claims

1. Pipe mounting device for fastening a pipe (30) on a surface (50) with
a) a fastening component (110; 110a; 210; 310), which can be attached on the surface (50); and
b) a pipe holding component (20; 20a; 320), which is formed for holding the pipe (30) and can be connected to the fastening component (10) by means of a clip mechanism (115, 21; 215, 21; 312, 321.3);
wherein
c) the fastening component (110; 210; 310) is tubular and can be fastened on the surface (50) by means of a screw (140) which can be fully accommodated in an internal space of the fastening component (110) so that a principle axis of the fastening component (110; 210; 310) is orientated perpendicularly to the surface (50);
d) the internal space of the fastening component (110) has a stop (114) for a screw head (40.2),
**characterized in that**
e) a female thread (117) for receiving the screw (140) with a matching male thread (140.3), especially for a hanger bolt, is formed on the stop (114), and
f) the stop (14; 114) is formed on at least one flange (14; 114) which projects inwards from walls (13.1, 13.3; 113.1, 113.3) of the fastening component (10; 110), wherein the at least one flange (14; 114) is at a distance from an end of the fastening component (10; 110) which in the fastened state faces the surface (50).

2. Pipe mounting device according to Claim 1, **characterized by** a cover sleeve (160) which is formed in such a way that it can be pushed onto the tubular fastening component (110) in a tightly encompassing manner in such a way that a gap between the fastening component (110) and the surface (50) can be closed off.

3. Pipe mounting device according to either of Claims 1 and 2, **characterized in that** the pipe holding component (20) is formed essentially by means of a clamp (21; 321) which can accommodate the pipe (30) in an encompassing manner, wherein the clamp (21; 321) can be slid over the pipe (30) transversely to a principle axis of the pipe (30).

4. Pipe mounting device according to one of Claims 1 to 3, **characterized in that** a part of the fastening component (110; 210; 310), and/or of the pipe holding component (20; 320), which is visible from the outside is produced from especially surface-treated steel plate.

5. Pipe mounting device according to one of Claims 1 to 4, **characterized in that** the pipe holding component (20; 320) has a liner (22; 322) of rubber, especially perforated rubber, on a contact surface with the pipe.

6. Pipe mounting device according to Claim 5, **characterized in that** the liner (22), on a first and/or second end of the liner which lies in the direction of a longitudinal axis of the pipe (30) which is to be accommodated, is closed off by means of an essentially annular cover (23) which is adapted to an outside diameter of the pipe (30), wherein the cover (23) is especially slotted in order to allow a deformation of the pipe holding component (20).

7. Pipe mounting device according to one of Claims 1 to 6, **characterized in that** the fastening component (110; 210; 310) has at least one side opening (112; 212; 312) for inserting a tool for releasing the clip mechanism (115, 21; 215, 21; 312, 321.3).

8. Pipe mounting device according to one of Claims 1 to 7, **characterized by**
a) a second fastening component (110b);
b) a second pipe holding component (20b), which is formed for holding a second pipe, wherein the second pipe holding component (20b) can be connected to the second fastening component (110b) by means of a clip mechanism;
c) a bracket (170), which can be fastened on the wall (50) and on which the fastening component (110a) and the second fastening component (110b) can be mounted for attaching on the surface (50).

9. Method for fastening a pipe (30) on a surface (50), which comprises the following steps:
a) attaching a tubular fastening component (110; 210; 310), which in the internal space has a stop (114) for a screw head, on the surface (50), wherein the stop (14; 114) is formed on at least one flange (14; 114) which projects inwards from walls (13.1, 13.3; 113.1, 113.3) of the fastening component (10; 110) so that the at least one flange (14; 114) is a distance from an end of the fastening component (10; 110) which in the fastened state faces the surface (50), wherein
a1) a hanger bolt (140) with its wood thread or dowel thread (140.1) is screwed in a dowel (51) which is fastened in the wall (50); and
a2) for adjusting a distance between the pipe (30) and the surface (50) the end of the fastening component (10; 110) which faces the surface (50), or a region of the fastening component (10; 110) which lies behind the inwards projecting flange (14; 114), is shortened; and
a3) the fastening component (110; 210; 310) is then screwed onto a metric male thread (140.3) of the hanger bolt (140) from behind by means of a female thread (117) which is formed on the stop (114);
b) encompassing the pipe by means of a pipe holding component (20; 320);
c) connecting the pipe holding component (20; 320), which encompasses the pipe (30), to the fastening component (10; 110; 210; 310), which is attached on the surface (50), by means of a clip mechanism (15, 21; 115, 21; 215, 21; 312, 321.3).

## Revendications

1. Dispositif de support de tuyaux pour fixer un tuyau (30) à une surface (50) avec :
a) une partie de fixation (110 ; 110a ; 210 ; 310) pouvant être amenée contre la surface (50) ; et
b) une partie de support de tuyau (20 ; 20a ; 320) réalisée pour supporter le tuyau (30) et pouvant être reliée à la partie de fixation (10) par le biais d'un mécanisme de clipsage (115, 21 ; 215, 21 ; 312, 321.3) ;
c) la partie de fixation (110 ; 210 ; 310) prenant une forme tubulaire et pouvant être fixée de telle sorte à la surface (50) à l'aide d'une vis (140) entièrement logée dans un espace intérieur de la partie de fixation (110) que l'axe principal de la partie de fixation (110 ; 210 ; 310) est orienté perpendiculairement à la surface (50) ;
d) l'espace intérieur de la partie de fixation (110) comportant une butée (114) pour une tête de vis (40.2) ;
**caractérisé en ce que :**
e) un filet intérieur (117) est réalisé avec un filet extérieur (140.3) adapté, notamment pour une vis à double filet, au niveau de la butée (114) pour loger la vis (140) ; et
f) la butée (14 ; 114) est réalisée au niveau d'au moins une bride (14 ; 114) saillant vers l'intérieur depuis les parois (13.1, 13.3 ; 113.1, 113.3) de la partie de fixation (10 ; 110), l'au moins une bride (14 ; 114) étant situé à une certaine distance d'une extrémité de la partie de fixation (10 ; 110) tournée vers la surface (50) à l'état fixé.

2. Dispositif de support de tuyaux selon la revendication 1, **caractérisé par** une enveloppe de revêtement (160) réalisée de telle sorte qu'elle peut être coulissée de façon à être étroitement serrée sur la partie de fixation (110) de forme tubulaire, qu'un interstice peut être fermé entre la partie de fixation (110) et la surface (50).

3. Dispositif de support de tuyaux selon l'une quelconque des revendications 1 à 2, **caractérisé en ce que** la partie de support de tuyau (20) est pour l'essentiel formée par une coque (21 ; 321) pouvant loger le tuyau (30) de façon à l'entourer, la coque (21 ; 321) pouvant être déplacée au-dessus du tuyau (30) transversalement par rapport à l'axe principal du tuyau (30).

4. Dispositif de support de tuyaux selon l'une quelconque des revendications 1 à 3, **caractérisé en ce qu'**une partie visible de l'extérieur de la partie de fixation (110 ; 210 ; 310) et/ou de la partie de support de tuyau (20 ; 320) est fabriquée à partir d'une tôle en acier, notamment traitée en surface.

5. Dispositif de support de tuyaux selon l'une quelconque des revendications 1 à 4, **caractérisé en ce que** la partie de support de tuyau (20 ; 320) comporte, au niveau d'une surface de contact avec le tuyau, une couche intermédiaire (22 ; 322) en caoutchouc, notamment en caoutchouc perforé.

6. Dispositif de support de tuyaux selon la revendication 5, **caractérisé en ce que** la couche intermédiaire (22) est fermée au niveau d'une extrémité de la couche intermédiaire reposant au niveau d'une première et/ou deuxième direction d'un axe longitudinal du tuyau (30) à loger au moyen d'un cache (23) pour l'essentiel de forme annulaire adapté à un diamètre extérieur du tuyau (30), le cache (23) étant notamment fendu de façon à permettre une déformation de la partie de support de tuyau (20).

7. Dispositif de support de tuyaux selon l'une quelconque des revendications 1 à 6, **caractérisé en ce que** la partie de fixation (110 ; 210 ; 310) comporte au moins une ouverture latérale (112 ; 212 ; 312) permettant d'introduire un outil permettant de déclencher le mécanisme de clipsage (115, 21 ; 215, 21 ; 312, 321.3).

8. Dispositif de support de tuyaux selon l'une quelconque des revendications 1 à 7, **caractérisé par** :
a) une deuxième partie de fixation (110b) ;
b) une deuxième partie de support de tuyau (20b) réalisée pour supporter un deuxième tuyau, la deuxième partie de support de tuyau (20b) pouvant être reliée à une deuxième partie de fixation (110b) par l'intermédiaire d'un mécanisme de clipsage ;
c) une console (170) pouvant être fixée à une paroi (50) et sur laquelle la partie de fixation (110a) et la deuxième partie de fixation (110b) peuvent être montées de façon à être posées sur la surface (50).

9. Procédé pour fixer un tuyau (30) à une surface (50), comprenant les étapes suivantes :
a) pose d'une partie de fixation (110 ; 210 ; 310) de forme tubulaire disposant d'une butée (114) dans l'espace intérieur pour une tête de vis au niveau de la surface (50), la butée (14 ; 114) étant réalisée au moins au niveau d'une bride (14 ; 114) saillant vers l'intérieur hors des parois (13.1, 13.3 ; 113.1, 113.3) de la partie de fixation (10 ; 110), de sorte que l'au moins une bride (14 ; 114) est placée à une certaine distance d'une extrémité de la partie de fixation (10, 110) tournée vers la surface (50) à l'état fixé ;
a1) une vis à double filet (140) étant vissée, avec son filet à bois et/ou à goujon (140.1), dans un goujon (51) disposé dans la paroi (50) ; et
a2) l'extrémité de la partie de fixation (10 ; 110) tournée vers la surface (50) et/ou une zone de la partie de fixation (10 ; 110) reposant derrière la bride (14 ; 114) saillant vers l'intérieur étant raccourcie pour adapter l'écartement entre le tuyau (30) et la surface (50) ; et
a3) la partie de fixation (110 ; 210 ; 310) étant ensuite vissée par derrière sur un filet extérieur (140.3) métrique de la vis à double filet (140) en passant à travers un filet intérieur (117) réalisé au niveau de la butée (114) ;
b) entourage du tuyau par une partie de support de tuyau (20 ; 320) ;
c) jonction de la partie de support de tuyau (20 ; 320) entourant le tuyau (30) avec la partie de fixation (10 ; 110 ; 210 ; 310) agencée à la surface (50) par le biais d'un mécanisme de clipsage (15, 21 ; 115, 21 ; 215, 21 ; 312, 321.3).
